(19) **Europäisches Patentamt**

**European Patent Office**

**Office européen des brevets**

(11) Publication number: **0 107 147**
**B1**

(12) **EUROPEAN PATENT SPECIFICATION**

(45) Date of publication of patent specification: **19.09.90**

(51) Int. Cl.⁵: **G 05 B 19/18**

(21) Application number: **83110175.3**

(22) Date of filing: **12.10.83**

(54) **Numerically controlled process and machine operating according to the process.**

(30) Priority: **12.10.82 JP 178708/82**
**12.10.82 JP 178709/82**

(43) Date of publication of application:
**02.05.84 Bulletin 84/18**

(45) Publication of the grant of the patent:
**19.09.90 Bulletin 90/38**

(84) Designated Contracting States:
**DE FR GB IT**

(56) References cited:
**EP-A-0 075 025**
**JP-A-57 164 305**
**US-A-4 033 206**
**US-A-4 350 941**
**US-A-4 415 977**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Niwa, Tomomitsu c/o Mitsubishi Denki K.K.**
**Nagoya Works No. 1-14, Yadaminami 5-chome**
**Higashi-ku Nagoya-shi Aichi (JP)**

(74) Representative: **Lehn, Werner, Dipl.-Ing. et al Hoffmann, Eitle & Partner Patentanwälte**
**Arabellastrasse 4**
**D-8000 München 81 (DE)**

Courier Press, Leamington Spa, England.

## Description

The present invention relates to a numerically controlled process (hereinafter referred to as an NC process) for processing an object (hereinafter referred to as the workpice) by controlling a processing machine e.g. a machine tool by means of a numerically controlling device (hereinafter referred to an an NC device), and is applicable to an NC working process for machining a workpiece according to a predetermined fashion, and relates to a machine operating according to the process.

Numerically controlled machining methods and apparatus for carrying out such methods are already known.

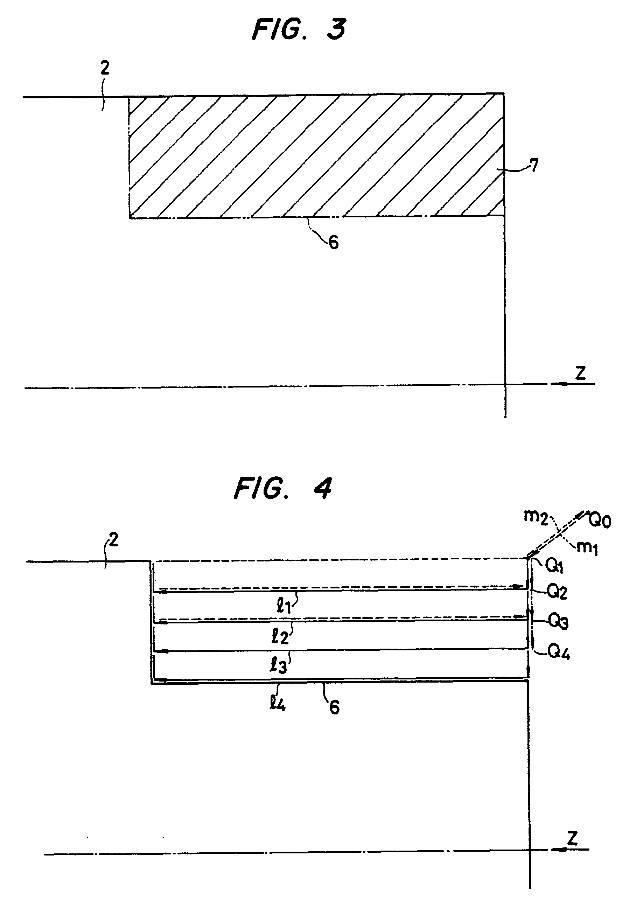

Thus in US—A—4 415 977 it is already known to so control a cutting tool that when it has moved along a working path through a workpiece to cut out one horizontal layer from a side portion thereof (Fig. 4 of said prior art), the tool rapidly rises above the workpiece, rapidly makes a return stroke across said cut-out portion and then rapidly descends to a level from which it can move along another working path below the first one to remove a further horizontal layer from said side portion of the workpiece.

A prior art that is of particular interest is that disclosed in JP—A—5 716 4305 the contents of which are also to be found in EP—A—0 075 025. The numerically controlled machine method and apparatus in this prior art involves the determination of a plurality of boundary surfaces in a workpiece to be machined, each adjacent pair of boundary surfaces, for example an upper boundary surface and a lower boundary surface, defining a quantity of material to be removed from within the workpiece. In operation, the working tool cuts downwardly from the upper boundary surface until it reaches the lower boundary surface. It then cuts along said lower boundary surface until it reaches a point at which the tool is caused to travel upwardly to the first boundary surface at which stage a first section has been completely cut away from the workpiece and is removed. Each of these cutting movements is carried out at a slow speed. The now exposed lower boundary surface then becomes the new upper boundary surface and the adjacent boundary surface therebelow becomes the new lower boundary surface. The tool then carries out a rapid idle stroke across the free space created by the removal of the first cut-away section and the aforesaid cutting sequence is repeated to cause a second section between said new upper and new lower boundary surfaces to be completely cut away from the workpiece, and so on.

The point of interest is that a lower boundary surface may be so shaped as to define an upwardly directed hump so that a hump in the material will remain when the section above said lower boundary surface has been cut away. The new lower boundary surface that then exists below the now humped upper boundary surface cannot pass through the hump since otherwise the hump will be cut away at the next working stroke. To prevent this the numerically controlled machine is so programmed that the cutting tool travels from a start point on the now exposed new upper boundary surface at slow speed along a new lower boundary surface until it finally rises up to a point where the plane of the new upper boundary surface extends through one side of the hump. At this point the numerically controlled apparatus causes the working tool to move rapidly up and around the hump and to then descend rapidly until it reaches the point where the upper boundary surface extends through the other side of the hump. At this stage the working tool reverts to its slow cutting speed to continue its cutting action down to and along the new lower boundary surface extending away from said other side of the hump.

In a numerically controlled processing machine (hereinafter referred to as an NC processing machine) controlled by an NC device, the tool position with respect to the workpiece is controlled by numerical information corresponding to the tool position, and an operation or the like is performed under the control of the NC device, so that the workpiece is machined using calculated values or the like. By means of such an NC processing machine, a workpiece can be easily machined into a complicated shape with high accuracy, and productivity can be improved.

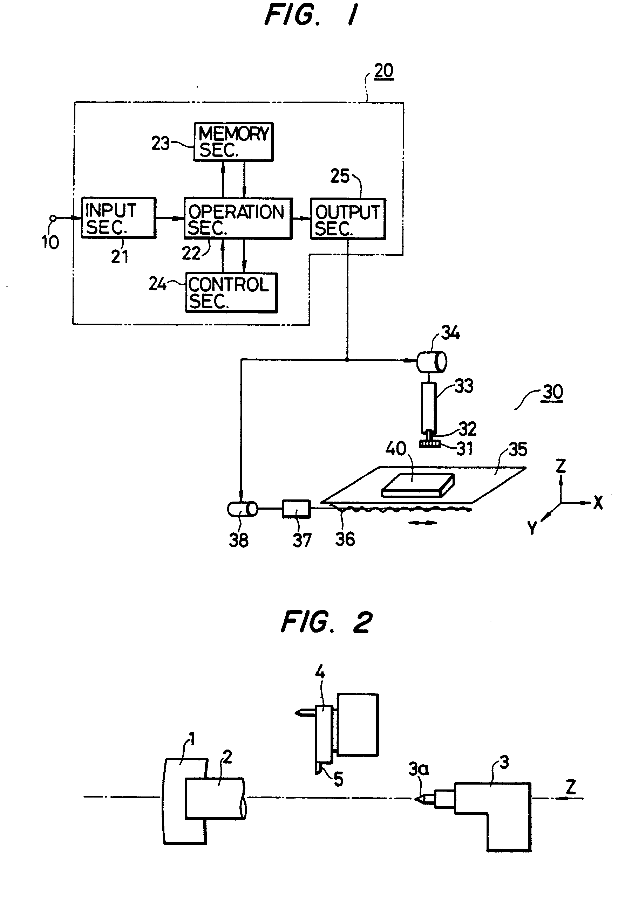

Generally, an NC processing machine is consituted, as shown in Figure 1 of the accompanying drawings, by an NC device 20 for operating upon numerical information commands externally inputted through a terminal 10, and a working machine 30 controlled using the values calculated in the NC device 20. The NC device 20 comprises an input section 21, an operation section 22 for processing commands from the input section 21, a memory section 23 for storing the results of processing in the operation section 22 or the instructions from the input section 21, a control section 24 for controlling the processing of the operation section 22, and an output section 25 for externally outputting processed values.

In the processing machine 30, a tool 31 is attached to a tool holder 32 which is in turn attached to a chuck of a spindle 33. The spindle 33 is rotated by a spindle motor 34 which is driven by a signal from the output section 25 of the NC device 20. A workpiece 40 is fixed onto a table 35 of the machine 30 by means of a jig or the like. In Fig. 1, reference numeral 36 designates a ball screw for moving the table 35 in the direction of the X-axis. The ball screw 36 is driven by an X-axis feed motor 38 through a gear box 37. The X-axis feed motor 38 is driven by a signal from the output section 25 of the NC device 20. Similarly to the arrangement for the X-axis, mechanisms (not shown) are provided for moving the table 35 in the Y-axis and Z-axis directions respectively, and are driven by signals from the NC device 20.

An example will be described hereinafter in which the NC working process as outlined above is applied to a lathe.

In Fig. 2, which is a schematic diagram of a lathe, a cylindrical workpiece 2 is supported at one end by a forward end portion 3a of a tail stock 3 and is positioned and fixed in a chuck 1 rotated about a rotary axis (Z-axis). A tool 5 for cutting the workpiece 2 is fixed onto a capstan rest 4. In cutting the workpiece 2, the capstan rest 4 is moved in the direction Z, as indicated by an arrow, whereby the workpiece 2 is machined.

In Fig. 3, the workpiece 2 is illustrated by a solid line, the final shape 6 of the workpiece 2 is shown by a two-dot chain line, and the cut portion 7 of the workpiece 2 is shown by oblique lines.

In Fig. 4, the working path for obtaining the final shape 6 is shown and consists of working path elements $l_1$, $l_2$, $l_3$, and $l_4$. The tool 5 is caused to move along the working path in the order of the original point $Q_0 \rightarrow$ a path $m_1 \rightarrow$ a first working start point $Q_1 \rightarrow$ working path element $l_1 \rightarrow$ a second working start point $Q_2 \rightarrow$ working path element $l_2 \rightarrow$ a third working start point $Q_3 \rightarrow$ working path element $l_3 \rightarrow$ a fourth working start point $Q_4 \rightarrow$ working path element $l_4 \rightarrow$ a path $m_2 \rightarrow$ the original point $Q_0$, to thereby obtain the final worked shape 6.

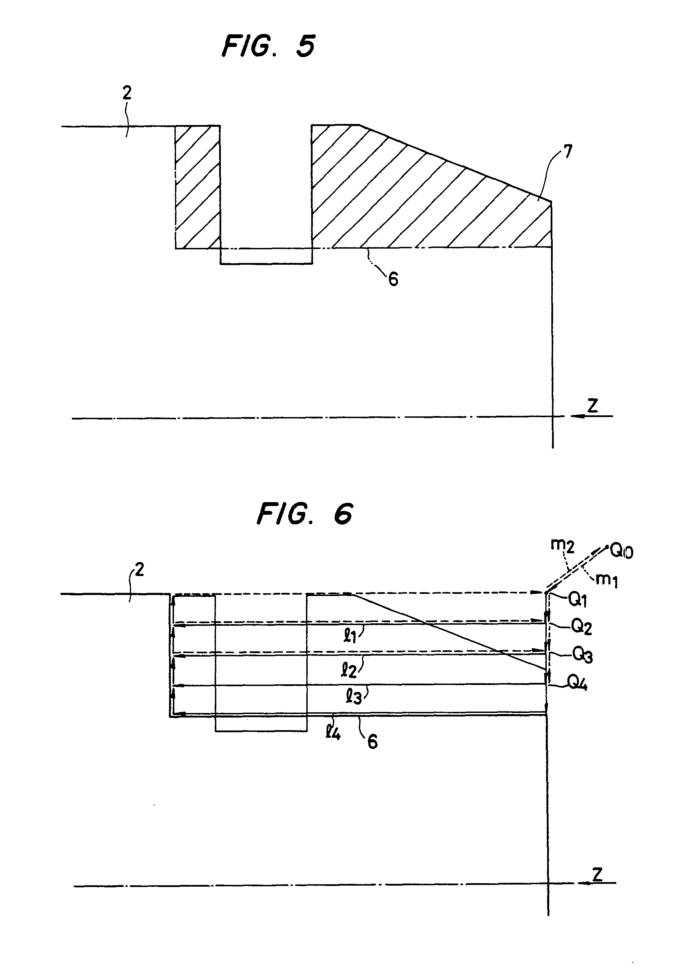

In the conventional NC working process, there is a problem in that when a final shape for the workpiece is inputted, the working path is determined regardless of the shape of the workpiece before machining, so that the amount of useless movement of the tool varies depending on the shape of the workpiece before machining, sometimes resulting in a very wasteful operation. This problem will be discussed hereunder referring to Fig. 5 and 6.

In Fig. 5, by way of example, a workpiece 2 which has been cut in advance is shown, and in Fig. 6, the working path for obtaining a final shape 6 is illustrated. Thus, the same working path as that in Fig. 4 is set in accordance with the desired final shape even for a preworked workpiece. In Fig. 6, the working paths $l_1$, $l_2$, $l_3$ and $l_4$ are set without regard to the shape of the workpiece before machining, and therefore in this case the tool 5 is caused to move at a relatively slow speed along parts of the working path where material of the workpiece 2 does not exist, resulting in lost working time.

The present invention is intended to overcome the above-mentioned problem in the prior art, and an object of the present invention is to provide an NC working process in which the moving speed of a tool over a range of non-working movement of the tool is increased relative to the moving speed during normal working, in accordance with the shape of the workpiece before machining, thereby to reduce the time wasted due to non-working movement of the tool.

A process for attaining the above-mentioned object is, according to the present invention, as defined in the accompanying Claim 1. A numerically controlled processing machine for attaining the above-mentioned object is, according to the present invention, as defined in the accompanying Claim 6.

The above and other objects, and advantages of the present invention will be apparent from the following detailed description of preferred embodiments of the invention making reference to the accompanying drawings; in which:

Fig. 1 is a schematic diagram explaining the constitution of a typical NC processing machine;

Fig. 2 is a schematic diagram showing a lathe;

Fig. 3 is a diagram showing a workpiece and the final shape thereof;

Fig. 4 is a diagram showing the working path for obtaining this final shape;

Fig. 5 is a diagram showing an example of a workpiece which has been cut in advance;

Fig. 6 is a diagram showing the normal working path for obtaining this final working shape;

Fig. 7 is a diagram showing the working path and the tool feed speed in a case when the present invention is applied;

Fig. 8 is a diagram explaining a method of distinguishing the actual working region and the non-working or idle movement region from each other;

Fig. 9 is a flowchart showing the processing procedure of a first embodiment in which the NC working process according to the present invention is applied;

Fig. 10 is a diagram explaining the setting of the working path;

Fig. 11 is a flowchart for processing step 103 of the flowchart of Fig. 9;

Fig. 12 is a diagram showing another example of a work which has been cut in advance; and

Fig. 13 is a diagram explaining the actual working region and the idle movement region.

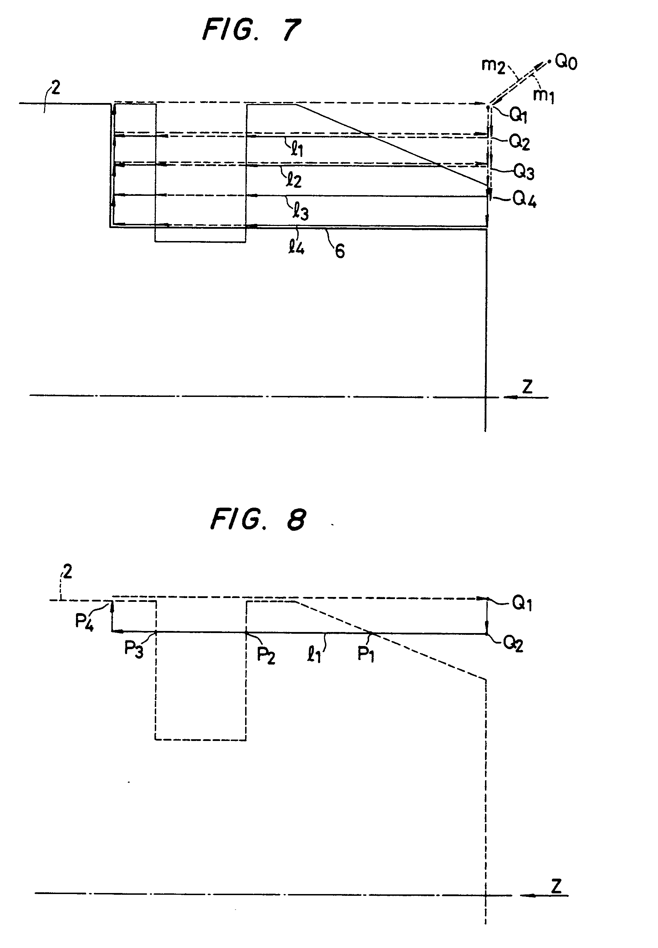

Fig. 7 shows the working path and the speed of the tool. This embodiment is set to obtain the final shape 6 for the preworked workpiece 2 as shown in Fig. 5. The working path per se of Fig. 7 is quite the same as that shown in Fig. 6, but the moving speed of the tool is different. That is, in Fig. 7, the working path indicated by a solid line shows a range in which cutting is actually effected into the workpiece (an actual working region) and in which the tool is fed at a relatively slow cutting speed, while the dotted line indicates a range in which the tool is idly moved without cutting the workpiece (an idle or non-working movement region) and in which the tool is moved at a high speed.

Fig. 8 shows a method of distinguishing the actual working region and the idle movement region from one another. According to the present invention, data as to the shape of the workpiece before machining is inputted in advance. The data on the shape of the workpiece before machining and a working path segment (represented by $l_1$ in Fig. 8) obtained on the basis of the finished shape 6 of the workpiece are compared with each other so as to first obtain the points of intersection therebetween. In Fig. 8, $P_1$, $P_2$, $P_3$, and $P_4$ represent the respective points of intersection. Since the working start point $Q_1$ is outside the workpiece shape, the path from the working start point $Q_1$ to the point of intersection

$P_1$ is an idle movement region and the tool is caused to move at a high speed in this region. The path from the point of intersection $P_1$ to the point of intersection $P_2$ is an actual working region, and therefore the tool is caused to move at a low cutting speed. Next, the path from the point of intersection $P_2$ to the point of intersection $P_3$ is an idle movement region, and therefore the tool is caused to move at a high speed. The path from the point of intersection $P_3$ to the point of intersection $P_4$ is an actual working region and therefore the tool is caused to move at a low cutting speed. This process is repeated, and the idle movement regions and actual working regions are also obtained for the other working path segments $l_2$, $l_3$ and $l_4$, to thereby switch the tool feed speed for the respective regions.

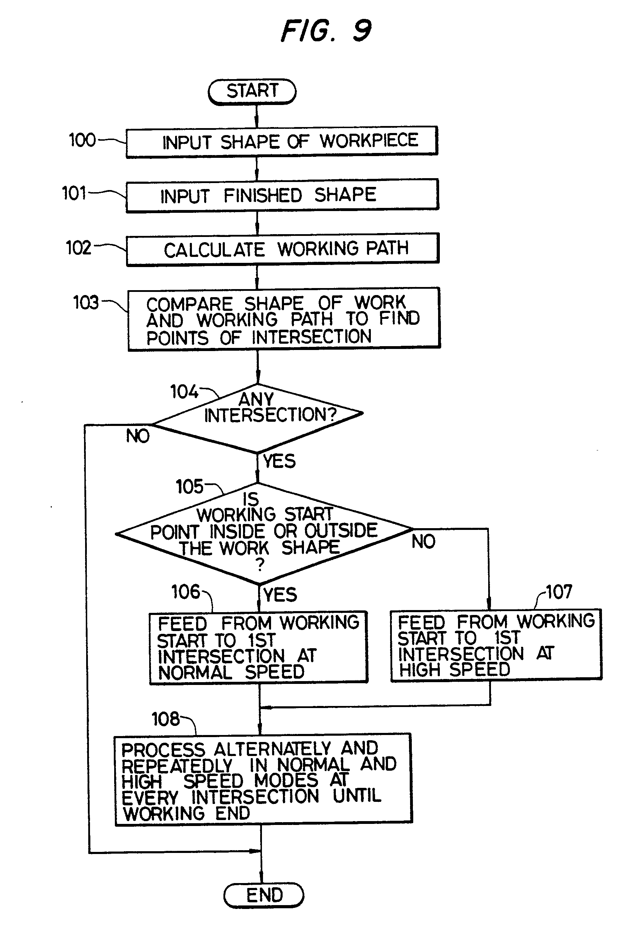

Fig. 9 is a flowchart showing the processing procedure when the above-described NC working process according to the present invention is used.

This flowchart will be described hereunder.

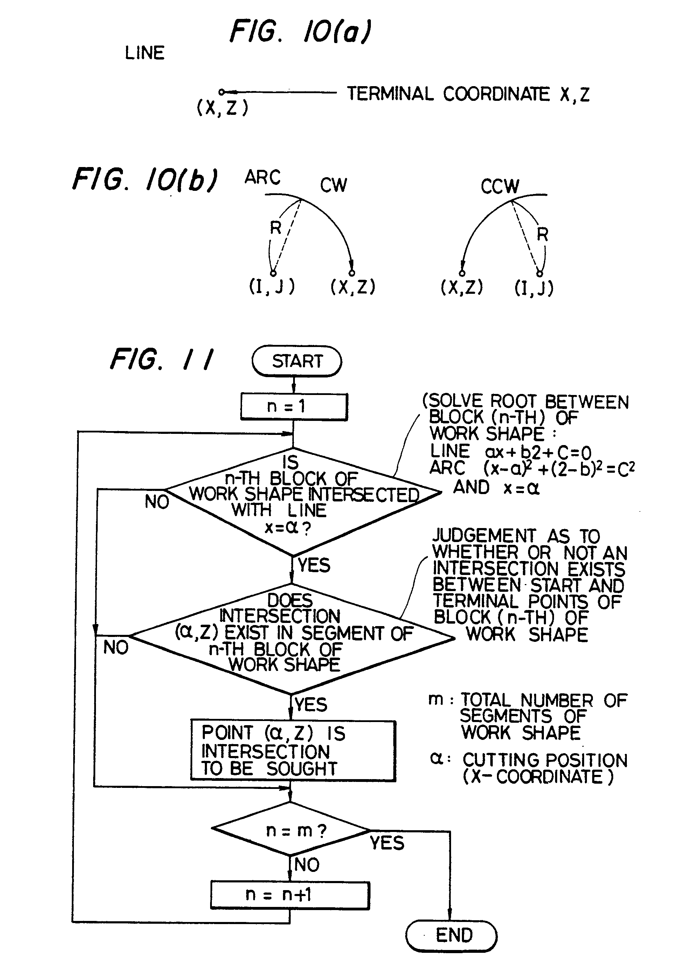

First, the shape of the workpiece before working is inputted (step 100), which is the information relating to the shape of the path from the start point to the end point at the inner or outer periphery of the workpiece as represented by line segments and/or circular arcs. More particularly, in the case of a line segment, the coordinate values X and Z of the end point of the line segment are set as shown in Fig. 10(a), and in the case of a circular arc, the coordinate values I and J of the center of the arc, the coordinate values X and Z of the end point, the value of the radius and the direction of rotation CW or CCW are set as shown in Fig. 10(b). The figure determined by these values is the workpiece shape and these values are inputted as the information on the workpiece shape.

Next, the desired finished shape of the workpiece is inputted (step 101). Similarly to the workpiece shape, the finish shape is expressed by line segments and/or circular arcs, and the information thereon is inputted.

Subsequently, the working path for the tool is automatically determined on the basis of the finished shape (step 102). This is performed such that an LAP path is automatically calculated on the basis of the preset finished shape, the cutting start point and the amount of cutting, and the working path for machining the workpiece at a position shifted from the cutting start point by the amount of cutting is formed and extracted.

The data on the shape of the workpiece before machining and the working path are compared with each other to obtain the points of intersection therebetween (step 103).

In this case, the working path causes the tool to laterally cut the workpiece in the Z-direction from the cutting position and therefore it will suffice to judge only whether the X coordinate value of the cutting position intersects the workpiece shape or not. The workpiece shape is a combination of line segments and/or circular arcs and therefore it will suffice to judge whether each of the line segments and/or circular arcs has a point of intersection at this X coordinate value. This operation may be expressed by a flowchart as shown in Fig. 11.

On the basis of this step, when there exists a point of intersection, judgement is made as to whether or not the working start point is outside the workpiece shape (step 105).

In the case where the working start point is outside the workpiece shape, the first tool feed speed is set at the high speed, while in the case where it is inside the work shape, the first tool feed speed is set at the low speed (step 107). Thereafter, every time the tool has reached a point of intersection, the tool feed speed is alternately switched from high speed to low speed or vice versa (step 108). The judgement as to whether the tool is outside the workpiece shape or not is performed in a manner such that if the tool is on the (+) side in the X-direction from the workpiece shape in working the outer periphery of the workpiece, or on the (−) side in working the inner periphery, it is judged that the tool is outside the workpiece shape, while if the tool is on the (−) side ((+) side) in the X-direction from the workpiece shape in working the outer (inner) periphery of the workpiece, respectively, it is judged that the tool is inside the workpiece shape. In the idle feed region, the tool feed speed may be set to several times the cutting speed, or alternatively may be set to another suitable value.

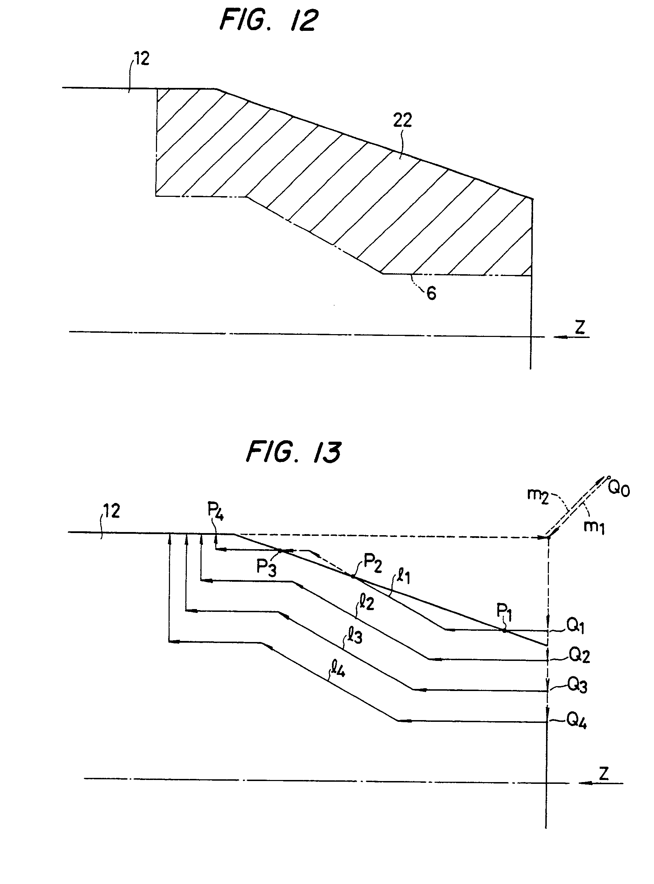

Fig. 12 and 13 show another embodiment of the present invention in which the working path of profile cutting is formed on the basis of the finished shape of the workpiece. Fig. 12 shows an example of a workpiece 12 which has been cut in advance, and the final working shape 6 is indicated by a two-dot chain line. The working path in this case consists of working path elements $l_1$, $l_2$, $l_3$ and $l_4$ as shown in Fig. 13. The tool 5 moves in the order of the working original point $Q_0 \rightarrow$ a path $m_1 \rightarrow$ a first working start point $Q_1 \rightarrow$ a working path element $l_1 \rightarrow$ a second working start point $Q_2 \rightarrow$ a working path element $l_2 \rightarrow$ a third working start point $Q_3 \rightarrow$ a working path element $l_3 \rightarrow$ a fourth working start point $Q_4 \rightarrow$ a working path element $l_4 \rightarrow$ a path $m_2 \rightarrow$ the original point $Q_0$ to thereby obtain the final shape 6. In the conventional working process, when the final shape is inputted, the working path is determined regardless of the shape of the workpiece before machining and therefore the idle movement of the tool increases, resulting in a waste of usable working time. Accordingly, similarly to the first embodiment, the shape of the workpiece is inputted in advance and the data on the inputted shape is compared with the above-mentioned working path so that a judgement is made as to whether the tool is outside the above-mentioned workpiece shape or not, so as to cause the tool to move at a high speed when the tool is outside the workpiece shape.

That is, the working path, as indicated by a solid line in Fig. 13, includes a range in which cutting is actually effected on the workpiece (an actual working region) and in which the tool is fed at the relatively slow cutting speed. The dotted line indicates the range in which the tool is idly moved without cutting the workpiece (an idle movement region) and in which the tool is caused to move at a high speed.

The actual working region and the idle movement region are distinguished from each other as follows. The data as to the shape of the workpiece 12 before machining is inputted in advance. The data on the shape before working and the working path (represented by $l_1$ in Fig. 13) obtained on the basis of the finished shape 6 of the workpiece 12 are compared with each other so as to first obtain the points of intersection therebetween. In Fig. 13, $P_1$, $P_2$, $P_3$ and $P_4$ represent the respective points of intersection. Since the working start point $Q_1$ is outside of the workpiece shape, the path from the working start point $Q_1$ to the point of intersection $P_1$ is an idle movement region and the tool is caused to move at a high speed in this region. The path from the point of intersection $P_1$ to the point of intersection $P_2$ is an actual working region and therefore the tool is caused to move at a low cutting speed. Next, the path from the point of intersection $P_2$ to the point of intersection $P_3$ is an idle movement region and therefore the tool is caused to move at high speed. The path from the point of intersection $P_3$ to the point of intersection $P_4$ is again an actual working region and therefore the tool is caused to move at the low cutting speed. This process is repeated in subsequent idle movement and actual working regions with respect to the other working paths $l_2$, $l_3$ and $l_4$, to thereby switch the tool feed speed for the respective regions.

Although the basic procedure for the above-mentioned process in the second embodiment is quite the same as shown in the flowchart of Fig. 9 for the first embodiment, the particular processing is of course different from the latter, as described above, in determining the working path in step 102 and in determining the points of intersection between the workpiece shape and the working path in the step 103. This example is also different in the processing of steps 106 to 108, in that the working path has to be traced in the second embodiment, while the points of intersection are merely connected by a straight line in the first embodiment.

## Claims

1. A numerically controlled process for processing a workpiece wherein;

(a) first data representing the initial shape of said workpiece is fed into a numerically controlled processing machine;

(b) the data representing the initial shape of said workpiece is compared in the numerically controlled processing machine with further data representing set working paths ($l_1$, $l_2$, $l_3$, $l_4$) of a tool (5) as automatically determined on the basis of a desired finished shape (6) of said workpiece;

(c) the numerically controlled processing machine is operated in dependence on said further data to cause the tool (5) to follow said set working paths ($l_1$, $l_2$, $l_3$, $l_4$);

(d) the numerically controlled processing machine utilises said first and further data to determine, for each desired working path the interseciton points, ($P_1$, $P_2$, $P_3$, $P_4$) where the shape of said workpiece before processing crosses said working path due to factors such as pre-cut recesses in the workpiece crossing the working path and/or pre-cut external shapes of the workpiece crossing the working path;

(e) the numerically controlled processing machine causes the tool (5) to travel at a slow speed along each working path where said working path is within the shape of the workpiece before processing and between two successive intersection points and to travel at high speed along each working path where said working path is outside the shape of the workpiece before processing and between two successive intersection points thereon.

2. A process according to claim 1 characterised in that said data representing the initial shape of the workpiece and said data representing the set working paths of the tool (5) are inputted as information representing the form of line segments and/or circular arcs representing the shape from the start intersection point to the end intersection point of each of said workpiece shape and said finished shape.

3. A process according to any one of the preceding claims, characterised in that said working path of said tool is calculated on the basis of said finished shape, a cutting start intersection point, and an amount of cut.

4. A process according to claim 1 characterised in that said point or points of intersection between said workpiece shape before machining and said working path is or are obtained by determining whether an X-coordinate value of the cutting position intersects said work shape before machining.

5. A process according to claim 4 characterised in that the determination as to whether the tool is outside said workpiece shape or not is made on the basis of whether the tool is at the (+) side or the (−) side, in the X-direction, relative to said workpiece shape.

6. A numerically controlled processing machine constructed to process a workpiece in the manner defined in any of claims 1 to 5 and comprising:

(a) means (100) to which data representing the initial shape of said workpiece can be fed including details of any pre-cut recesses in the workpiece;

(b) means (101) to which data representing the desired finished shape of said workpiece can be fed;

(c) means (102) for automatically determining on the basis of said desired finished shape working paths to be followed by a tool (5) of the machine;

(d) means (103; Fig. 11) for comparing the data representing the initial shape of the workpiece with the data representing the desired finished shape of the workpiece to determine, for each of said working paths, the intersection points where the shape of the workpiece before processing crosses said working paths due to factors such as pre-cut recesses in the initial shape of the workpiece crossing said working paths and/or pre-cut external shapes of the workpiece crossing said working paths; and

(e) means (104 to 108) for causing the tool (5) to travel at a slow speed along each working path where said working path is within the shape of the workpiece before processing and between two successive points thereon; and to travel at high speed along each working path where said working path is outside the shape of the workpiece before processing and between two successive intersection points thereon.

## Patentansprüche

1. Numerisch gesteuertes Verfahren zur Bearbeitung eines Werkstückes, worin:

(a) erste Daten, welche die ursprüngliche Form des Werkstückes repräsentieren, in eine numerisch gesteuerte Verarbeitungsmaschine gespeist werden;

(b) die Daten, die die ursprüngliche Form des Werkstückes repräsentieren, in der numerisch gesteuerten Verarbeitungsmaschine mit weiteren Daten, welche eingestellte Arbeitspfade ($l_1$, $l_2$, $l_3$, $l_4$) eines Werkzeuges (5) repräsentieren, die automatisch auf der Basis einer gewünschten Endform (6) des Werkstückes bestimmt werden, verglichen werden;

(c) die numerisch gesteuerte Verarbeitungsmaschine in Abhängigkeit von den weiteren Daten betrieben wird, das Werkzeug (5) zu veranlassen, den eingestellten Arbeitspfaden ($l_1$, $l_2$, $l_3$, $l_4$) zu folgen;

(d) die numerisch gesteuerte Verarbeitungsmaschine die ersten und weiteren Daten benutzt, um für jeden gewünschten Arbeitspfad die Schnittpunkte ($P_1$, $P_2$, $P_3$, $P_4$), in welchen die Form des Werkstückes vor der Verarbeitung den Arbeitspfad aufgrund von Faktoren wie vorgeschnittenen Aussparungen im Werkstück, die den Arbeitspfad kreuzen, und/oder vorgeschnittenen externen Formen des Werkstückes, welche den Arbeitspfad kreuzen, zu bestimmen;

(e) die numerisch gesteuerte Verarbeitungsmaschine das Werkzeug (5) veranlaßt, sich mit niedriger Geschwindigkeit entlang jedem Arbeitspfad zu bewegen, wo der Arbeitspfad innerhalb der Form des Werkstücks vor der Verarbeitung und zwischen zwei aufeinanderfolgenden Schnittpunkten verläuft, und sich mit hoher Geschwindigkeit entlang jedem Arbeitspfad zu bewegen, wo der Arbeitspfad außerhalb der Form des Werkstückes vor der Verarbeitung und zwischen zwei aufeinanderfolgenden Schnittpunkten darauf verläuft.

2. Varfahren nach Anspruch 1, dadurch genkennzeichnet, daß die Daten, die die ursprüngliche Form des Werkstückes repräsentieren, und die Daten, die die eingestellten Arbeitspfade des Werkzeuges (5) repräsentieren, als Information eingegeben werden, welche die Form von Liniensegmenten und/oder kreisförmigen Bögen repräsentiert, die die Form von der Werkstückgestalt und der Endgestalt vom Startschnittpunkt zum Endschnittpunkt repräsentieren.

3. Verfahren nach einem der vorhergehenden Ansprüche, dadurch gekennzeichnet, daß der Arbeitspfad des Werkzeuges auf der Grundlage der Endform, einem Schneide-Startschnittpunkt und einem Schnittbetrag berechnet wird.

4. Verfahren nach Anspruch 1, dadurch gekennzeichnet, daß der Schnittpunkt oder die Schnittpunkte zwischen der Werkstückform vor der Bearbeitung und dem Arbeitspfad durch Bestimmung, ob ein X-Koordinatenwert der Schnittposition sich mit der Form des Werkstückes vor der Bearbeitung schneidet, erhalten wird bzw. werden.

5. Verfahren nach Anspruch 4, dadurch gekennzeichnet, daß die Bestimmung, ob das Werkzeug außerhalb der Form des Werkstückes ist oder nicht, auf der Grundlage gemacht wird, ob das Werkzeug auf der (+)-Seite oder der (−)-Seite in X-Richtung relativ zur Werkstückform ist.

6. Numerisch gesteuerte Verarbeitungsmaschine, die konstruiert ist, um ein Werkstück in der in einem der Ansprüche 1 bis 5 definierten Weise zu bearbeiten, und umfaßt:

(a) Mittel (100), in welche Daten, welche die ursprüngliche Form des Werkstückes repräsentieren, eingeschlossen Einzelheiten irgendwelcher vorgeschnittener Aussparungen in dem Werkstück, eingespeist werden können;

(b) Mittel (101), in welche Daten, welche die gewünschte Endform des Werkstückes repräsentieren, eingespeist werden können;

(c) Mittel (102), um automatisch auf der Grundlage der gewünschten Endform Arbeitspfade zu bestimmen, die von einem Werkzeug (5) der Maschine befolgt werden;

(d) Mittel (103; Fig. 11), um die Daten, welche die ursprüngliche Form des Werkstückes repräsentieren, mit den Daten zu vergleichen, welche die gewünschte Endform des Werkstückes repräsentieren, um für jeden der Arbeitspfade die Schnittpunkte zu bestimmen, wo die Form des Werkstückes vor der Verarbeitung die Arbeitspfade aufgrund von Faktoren wie die Arbeitspfade kreuzende vorgeschnittene Aussparungen in der ursprünglichen Form des Werkstückes und/oder die Arbeitspfade kreuzende vorgeschnittene äußere Formen des Werkstückes kreuzt; und

(e) Mittel (104 bis 108), um das Werkzeug (5) zu veranlassen, sich mit langsamer Geschwindigkeit entlang jedem Arbeitspfad zu bewegen, wo der Arbeitspfad innerhalb der Form des Werkstückes vor der Verarbeitung und zwischen zwei aufeinanderfolgenden Punkten darauf verläuft; und sich mit hoher Geschwindigkeit entlang jedem Arbeitspfad zu bewegen, wo der Arbeitspfad außerhalb der Form des Werkstückes vor der Verarbeitung und zwischen zwei aufeinanderfolgenden Schnittpunkten darauf verläuft.

**Revendications**

1. Processus à commande numérique pour traiter une pièce à travailler, dans lequel;

(a) des premières données représentant la forme initiale de ladite pièce à travailler sont introduites dans une machine de traitement à commande numérique;

(b) les données représentant la forme initiale de ladite pièce à travailler sont comparées dans la machine de traitement à commande numérique avec des données supplémentaires représentant des trajectoires de travail établies ($l_1$, $l_2$, $l_3$, $l_4$) d'un outil (5), comme déterminé automatiquement à partir d'une forme finie désirée (6) de ladite pièce à travailler;

(c) la machine de traitement à commande numérique fonctionne en fonction desdites données supplémentaires pour faire que l'outil (5) suive lesdites trajectoires de travail établies ($l_1$, $l_2$, $l_3$, $l_4$);

(d) la machine de traitement à commande numérique utilise lesdites premières données et lesdites données supplémentaires pour déterminer, pour chaque trajectoire de travail désirée, les points d'intersection ($P_1$, $P_2$, $P_3$, $P_4$) où la forme de ladite pièce à travailler avant le traitement croise ladite trajectoire de travail, dû à des facteurs tels que creux précoupés dans la pièce à travailler croisant la trajectoire de travail et/ou formes extérieures précoupées de la pièce à travailler croisant la trajectoire de travail;

(e) la machine de traitement à commande numérique fait se déplacer l'outil (5) à une vitesse lente le long de chaque trajectoire de travail là où ladite trajectoire de travail est à l'intérieur de la forme de la pièce à travailler avant le traitement et entre deux points d'intersection successifs et le fait se déplacer à vitesse élevée le long de chaque trajectoire de travail là où ladite trajectoire de travail est à l'extérieur de la forme de la pièce à travailler avant le traitement et entre deux points d'intersection successifs sur la pièce.

2. Processus selon la revendication 1, caractérisé en ce que lesdites données représentant la forme initiale de la pièce à travailler et lesdites données représentant les trajectoires de travail établies de l'outil (5) sont introduites en tant qu'informations représentant la forme de segments de droites et/ou d'arcs de cercles représentant la forme depuis le point d'intersection de départ jusqu'au point d'intersection final de chacune de ladite forme de la pièce à travailler et de ladite forme finie.

3. Processus selon l'une quelconque des revendications précédentes, caractérisé en ce que ladite trajectoire de travail dudit outil est calculée à partir de ladite forme finie, d'un point d'intersection de départ de coupe, et d'un montant de coupe.

4. Processus selon la revendication 1, caractérisé en ce que ledit point ou points d'intersection entre ladite forme de la pièce à travailler avant l'usinage et ladite trajectoire de travail est ou sont obtenus en déterminant si une valeur de la coordonnée X de la position de coupe intersecte ladite forme de travail avant l'usinage.

5. Processus selon la revendication 4, caractérisé en ce que la détermination concernant si l'outil est à l'extérieur de ladite forme de la pièce à travailler ou non est faite à partir de selon que l'outil est du côté (+) ou du côté (−), dans la direction X, relativement à ladite forme de la pièce à travailler.

6. Machine de traitement à commande numérique, construite pour traiter une pièce à travailler de la manière définie dane l'une quelconque des revendications 1 à 5 et comprenant:

(a) moyens (100) auxquels des données représentant la forme initiale de ladite pièce à travailler peuvent être alimentées, y compris des détails de creux quelconques précoupés dans la pièce à travailler;

(b) moyens (101) auxquels des données représentant la forme finie désirée de ladite pièce à travailler peuvent être alimentées;

(c) moyens (102) pour déterminer automatiquement, à partir de ladite forme finie désirée, des trajectoires de travail à faire suivre par un outil (5) de la machine;

(d) moyens (103; fig. 11) pour comparer les données représentant la forme initiale de la pièce à travailler avec les données représentant la forme finie désirée de la pièce à travailler pour déterminer, pour chacune desdites trajectoires de travail, les points d'intersection où la forme de la pièce à travailler avant le traitement croise lesdites trajectoires de travail, dû à des facteurs tels que creux précoupés dans la forme initiale de la pièce à travailler croisant lesdites trajectoires de travail et/ou formes extérieures précoupées de la pièce à travailler croisant lesdites trajectoires de travail; et

(e) moyens (104 à 108) pour faire se déplacer l'outil (5) à une vitesse lente le long de chaque trajectoire de travail là où ladite trajectoire de travail est à l'intérieur de la forme de la pièce à travailler avant le traitement et entre deux points successifs sur la pièce; et le fait se déplacer à vitesse élevèe le long de chaque trajectoire de travail là où ladite trajectoire de travail est à l'extérieur de la forme de la pièce à travailler avant le traitement et entre deux points d'intersection successifs sur la pièce.

## FIG. 1

## FIG. 2

## FIG. 3

## FIG. 4

**FIG. 5**

**FIG. 6**

*FIG. 7*

*FIG. 8*

4

## FIG. 9

```
                    ( START )
                       │
   100 ─── [ INPUT SHAPE OF WORKPIECE ]
                       │
   101 ─── [ INPUT  FINISHED  SHAPE ]
                       │
   102 ─── [ CALCULATE  WORKING PATH ]
                       │
   103 ─── [ COMPARE  SHAPE  OF  WORK
             AND  WORKING  PATH  TO FIND
             POINTS  OF  INTERSECTION ]
                       │
   104 ─── < ANY
             INTERSECTION? >
       NO ◄──        │ YES
                       │
   105 ─── < IS
             WORKING  START
             POINT  INSIDE OR OUTSIDE
             THE  WORK  SHAPE
             ? >───── NO ──────┐
                       │ YES            │
   106 ── [ FEED  FROM WORKING    107 ─ [ FEED  FROM WORKING
            START  TO  1ST            START  TO  1ST
            INTERSECTION  AT          INTERSECTION  AT
            NORMAL  SPEED ]           HIGH SPEED ]
                       │                │
                       ◄────────────────┘
                       │
   108 ── [ PROCESS  ALTERNATELY  AND
            REPEATEDLY  IN  NORMAL  AND
            HIGH   SPEED  MODES  AT
            EVERY  INTERSECTION  UNTIL
            WORKING  END ]
                       │
                    ( END )
```

EP 0 107 147 B1

# FIG. 10(a)

LINE

$(X, Z)$ ——————— TERMINAL COORDINATE X, Z

# FIG. 10(b)

ARC

CW

R

$(I, J)$  $(X, Z)$

CCW

R

$(X, Z)$  $(I, J)$

# FIG. 11

START

$n = 1$

IS n-TH BLOCK OF WORK SHAPE INTERSECTED WITH LINE $x = \alpha$ ?

(SOLVE ROOT BETWEEN BLOCK (n-TH) OF WORK SHAPE :
LINE $\alpha x + b2 + C = 0$
ARC $(x - a)^2 + (2 - b)^2 = C^2$
AND $x = \alpha$

NO

YES

DOES INTERSECTION $(\alpha, Z)$ EXIST IN SEGMENT OF n-TH BLOCK OF WORK SHAPE

JUDGEMENT AS TO WHETHER OR NOT AN INTERSECTION EXISTS BETWEEN START AND TERMINAL POINTS OF BLOCK (n-TH) OF WORK SHAPE

NO

YES

POINT $(\alpha, Z)$ IS INTERSECTION TO BE SOUGHT

m : TOTAL NUMBER OF SEGMENTS OF WORK SHAPE

$\alpha$ : CUTTING POSITION (X-COORDINATE)

$n = m$ ?

YES

NO

$n = n + 1$

END

# FIG. 12

# FIG. 13